# EUROPÄISCHE PATENTSCHRIFT

(11) **EP 1 425 238 B1**
(45) Veröffentlichungstag und Bekanntmachung des Hinweises auf die Patenterteilung: **29.12.2004**
(21) Anmeldenummer: 02797951.7
(22) Anmeldetag: 04.09.2002
(51) Int. Cl.: B65G 47/82, B65G 43/00, B07C 5/36

(54) **VORRICHTUNG UND VERFAHREN ZUM SORTIEREN VON GEGENSTÄNDEN**
DEVICE AND METHOD FOR SORTING OBJECTS
DISPOSITIF ET PROCEDE DE TRI D'OBJETS

(30) Priorität: 05.09.2001 DE 10143430
(43) Veröffentlichungstag der Anmeldung: 09.06.2004
(73) Patentinhaber: KRONES AG, 93068 Neutraubling (DE)
(72) Erfinder: HEITZER, Albert, 93090 Bach (DE); SCHMIDBAUER, Alois, 93109 Wiesent (DE)
(86) Internationale Anmeldenummer: PCT/EP2002/009892
(87) Internationale Veröffentlichungsnummer: WO 2003/022717

(56) Entgegenhaltungen:
- DE-A- 19 516 403
- DE-A- 19 532 306

## Beschreibung

Die Erfindung betrifft ein Verfahren und eine Vorrichtung zum Sortieren von Gegenständen auf einer Transporteinrichtung.

Bekannt ist aus der DE 195 32 306 eine Vorrichtung zum Aussortieren von als fehlerhaft erkannten Verpackungseinheiten aus einer Anzahl von vorbeiziehenden Verpackungseinheiten. Bei dieser Vorrichtung wird ein als Rotor ausgebildeter Aussortierer in vertikaler Drehebene hinund hergesteuert. Damit können als fehlerhaft erkannte, z. B. verschmutze oder kaputte Verpackungseinheiten, die auf einem Förderer transportiert werden, durch seitliches Herausschieben aus dem Strom von Verpackungseinheiten aussortiert werden. Je nach Art der Verpackungseinheit wird die Regelung des Schrittmotors bestimmt. Dadurch können große Flaschen in einem anderen Bereich von dem gleichen Rotor impulsartig getroffen werden als kleine Flaschen.

Bei einer derartigen Vorrichtung hat es sich als nachteilig herausgestellt, dass selbst bei der Aussortierung von gleichartigen Verpackungseinheiten die durch den Rotor erzeugte Bewegung der Verpackungseinheit immer individuell verschieden ausfällt, d. h. selbst bei gleichen Verpackungseinheiten, die auf die selbe Art und Weise von dem Rotor in Bewegung gesetzt werden, fällt die Bewegung der Verpackungseinheit jedesmal anders aus. Dies liegt zum einen an den unterschiedlich stark abgenutzten Unterseiten von z. B. Flaschen und zum anderen an den glatten oder mit Schmiermittel behafteten Bereichen eines Förderers. Dadurch werden die Verpackungseinheiten, die aussortiert werden sollen, verschieden weit, schnell und stark auf z. B. einen anderen Förderer bewegt, was zu einer ungenauen Positionierung, zum Kippen oder zur Zerstörung der Verpackungseinheit führen kann.

Bekannt ist weiterhin eine Vorrichtung zum Überführen von Gegenständen, insbesondere von Flaschen, aus der DE 195 16 403. Bei dieser Vorrichtung werden Flaschen auf ein zweites Förderband mit einem im Wesentlichen gradlinienig hin- und herbeweglich gelagerten Stößel überführt. Auch auf diese Vorrichtung treffen im wesentlichen die o.g. Nachteile zu.

Aufgabe der vorliegenden Erfindung ist es, eine Vorrichtung und ein Verfahren zu schaffen, mit dem ein zuverlässiges Sortieren von Gegenständen auf einer Transporteinrichtung erfolgen kann.

Diese Aufgabe wird durch ein Verfahren mit den Merkmalen des Anspruchs 1 und eine Vorrichtung mit den Merkmalen des Anspruchs 15 gelöst.

Bei dem erfindungsgemäßen Verfahren wird zunächst die Reibung zwischen dem Gegenstand und der Transporteinrichtung bestimmt. Dies geschieht individuell für jeden einzelnen Gegenstand, der auf der Transporteinrichtung transportiert wird oder auch nur für jeden Gegenstand auf der Transporteinrichtung, der aussortiert werden soll. Bestimmen der Reibung meint hier aber nicht zwingend, dass tatsächlich ein physikalischer Reibungskoeffizient errechnet wird, vielmehr ist hier gemeint, dass eine reibungsabhängige Größe ermittelt wird, die es erlaubt, festzustellen, wie leicht bzw. schwer sich die Gegenstände auf der Transporteinrichtung verschieben lassen.

Nachdem die Reibung zwischen dem Gegenstand und der Transporteinrichtung bestimmt ist, wird in Abhängigkeit von dieser bestimmten Reibung eine Überführbewegung ausgelöst.

Das Auslösen einer Bewegung geschieht z. B. durch definierten Kraft- oder Impulsübertrag, wodurch der Gegenstand relativ zu der Transporteinrichtung in Bewegung versetzt wird. Auch nach Abschluss des Auslösens kann sich der Gegenstand erfindungsgemäß durch seine Trägheit, z. B. durch Rutschen, weiterbewegen.

Dadurch, dass individuell für jeden Gegenstand die Reibung . bestimmt wird, kann individuell für jeden Gegenstand die Überführbewegung verschieden stark ausgelöst werden, so dass sich insgesamt immer eine sehr genaue Positionierung bzw. eine wohldefinierte Bewegung des Gegenstandes auf der Transporteinrichtung einstellt.

Durch das für jeden Gegenstand individuell angepaßte Auslösen der Überführbewegung wird ein Kippen des Gegenstandes sowie ein zu weites oder zu wenig weites Verschieben des Gegenstandes auf der Transporteinrichtung vermieden. Dies führt im Falle von Flaschen dazu, dass weniger Betriebsstörungen und/oder Bruch entstehen.

Eine vorteilhafte Ausführungsform des erfindungsgemäßen Verfahrens besteht darin, die Reibung zwischen dem Gegenstand und der Transporteinrichtung durch ein vordefiniertes Auslösen einer Messbewegung und dem Messen der Messbewegung zu bestimmen. Das vordefinierte Auslösen geschieht durch einen vordefinierten Kraft- oder Impulsübertrag oder durch das Auslösen einer Bewegung des Gegenstandes mit vordefinierter Geschwindigkeit oder Mindestauslenkung. Hierbei ist es vorteilhaft, wenn die Messbewegung deutlich kleiner ist als die Überführungsbewegung. Das bedeutet auch, dass der Impuls oder die Kraft, durch die die Messbewegung ausgelöst wird, deutlich kleiner ist als der Impuls oder die Kraft zum Auslösen der Überführungsbewegung.

Wenn die Messbewegung im Vergleich zur Überführungsbewegung klein ist, wird sichergestellt, dass beim Auslösen der Messbewegung ein Kippen oder ein übermäßiges Verschieben des Gegenstandes auf der Transporteinrichtung vermieden wird.

Das Messen der Messbewegung kann dadurch geschehen, dass mindestens eine Positionsinformation bezüglich des Gegenstandes 3 auf der Transporteinrichtung 2 ermittelt wird, während oder nachdem der Gegenstand die Messbewegung ausführt bzw. ausgeführt hat, wobei dies vorzugsweise eine Abstandsmessung umfasst.

Das Messen kann aber auch dadurch erfolgen, dass die Kraft- bzw. Impulsrückwirkung eines Gegenstandes auf das die Messbewegung auslösende Organ ermittelt wird.

Das Vermessen der Messbewegung durch Bestimmung einer Positionsinformation bzw. einer Abstandsmessung ist relativ einfach, schnell und zuverlässig durchführbar und daher für das erfindungsgemäße Verfahren von Vorteil.

Vorteilhafter Weise wird der Gegenstand auf der Transporteinrichtung quer zu der Bewegungsrichtung, die durch die Transporteinrichtung vorgegeben ist, überführt. Die Richtung der Messbewegung ist ebenfalls im Wesentlichen senkrecht zur Transportrichtung. Dadurch wird erreicht, dass die Gegenstände an verschiedenen Positionen quer zu der Transportrichtung, d. h. beispielsweise auf eine Seite der Transporteinrichtung, oder in der Mitte der Transporteinrichtung positioniert werden, so dass im weiteren Verlauf sich aus der Position des Gegenstandes ein Aussortieren des Gegenstandes ergibt.

Das Auslösen der Messbewegung und/oder der Überführbewegung kann vorteilhafterweise mit einem Stößel, einer Nocke oder einer Bürste durchgeführt werden. Durch einen hin- und herbeweglichen Stößel, eine hin- und/oder herbewegbare Nocke oder einer Bürste können wohldefinierte Kräfte und Impulse auf den Gegenstand zum Auslösen der jeweiligen Bewegung ausgeübt werden.

Das Auslösen der Messbewegung ist weiterhin mittels einer -in die Bahn der Gegenstände platzierbare -Schanze vorteilhaft möglich. Die Schanze ist so angeordnet, dass die Gegenstände, die auf der Transporteinrichtung transportiert werden, durch die Schanze in Richtung quer zu der Transporteinrichtung verschoben werden, so dass hierdurch eine Messbewegung ausgelöst wird. Die Schanze kann hierbei sämtliche Gegenstände, die auf der Transporteinrichtung bewegt werden, verschieben. Dadurch ist eine sehr einfache und kostengünstige Konstruktion der Schanze, beispielsweise durch ein einfaches Blech oder einen Draht bzw. ein Gitter möglich. Auch ist es denkbar, die Schanze beweglich zu gestalten, so dass nur für diejenigen Gegenstände, die aussortiert werden sollen, die Messbewegung ausgelöst wird. Dies führt vorteilhafter Weise dazu, dass die Gegenstände, die nicht aussortiert werden sollen, auch nicht einer Messbewegung unterzogen werden.

Dies hat die Vorteile, dass ein Rippen bei der Messbewegung durch Wegfall der Messbewegung für ordnungsgemäße Verpackungseinheiten ausgeschlossen wird und zum anderen, dass die Position des Gegenstandes auf der Transporteinrichtung für ordnungsgemäße Gegenstände unverändert bleibt, was für die Sortierung vorteilhaft ist.

An der Schanze kann eine Kraft- oder Druckmesseinrichtung zur Ermittlung der im Wesentlichen quer zur Transportrichtung gerichteten Kraft- bzw. Impulsrückwirkung der von der Schanze um einen bestimmten Weg quer zur Transportrichtung verdrängten Gegenstände vorgesehen werden, so dass eine Positionsermittlung der Gegenstände auf dem Wege einer Abstandsmessung entbehrlich ist.

Die Überführbewegung kann zum einen dazu führen, dass vorteilhafterweise der Gegenstand in Richtung senkrecht zur Transporteinrichtung positioniert wird. Dies bedeutet, dass der Gegenstand auf der Transporteinrichtung nach der Überführbewegung in Bezug auf eine Bewegung im Wesentlichen senkrecht zur Transporteinrichtung zur Ruhe kommt. Der Gegenstand bewegt sich also nach der Überführbewegung nicht mehr relativ zu der sich bewegenden Transporteinrichtung. Durch das Positionieren des Gegenstandes kann somit eine Aussortierung oder seitliche Versetzung der Gegenstände in verschiedene Bereiche erreicht werden.

Zum anderen ist es möglich, die Überführbewegung so auszuführen, dass der Gegenstand von der Transporteinrichtung herunterbewegt wird. Auch dies vereinfacht das Aussortieren des Gegenstandes.

Eine besonders vorteilhafte Ausführungsform des erfindungsgemäßen Verfahrens besteht darin, einen Stößel oder eine Nocke so zu positionieren, dass vor Auslösen der Überführbewegung oder der Messbewegung der mit dem Gegenstand in Kontakt kommende Teil des Stößels oder der Nocke dicht an den jeweiligen Gegenstand heranbewegt ist, und dass anschließend durch Bewegen des Stößels oder der Nocke ein wohldefiniertes Schieben des Gegenstandes einsetzt. Dadurch wird ein ruckartiges Stoßen des Gegenstandes durch den Stößel oder den Nocken vermieden. Würde nämlich der Stößel bzw. der Nocken aus einer größeren Entfernung auf den Gegenstand zubewegt, so würde sich, sobald der Stößel oder der Nocken Kontakt mit dem Gegenstand hat, ein starker Impuls auf den Gegenstand übertragen, der zu einem Kippen des Gegenstandes führen könnte.

Vorteilhafte Ausführungsformen des Verfahrens bestehen darin, mit dem Verfahren Gegenstände, insbesondere Flaschen, aus einer Reihe von durchlaufenden Flaschen auszusortieren.

Vorteilhafterweise werden bei der Durchführung des erfindungsgemäßen Verfahrens als Transporteinrichtung ein, zwei oder mehrere Platten-, Mattenketten- oder Rollenbettförderer verwendet. Auch der Einsatz jedes anderen beliebigen üblicherweise verwendeten Förderers ist vorteilhafterweise möglich.

Die erfindungsgemäße Vorrichtung zur Bewegung eines Gegenstandes auf einer Transporteinrichtung umfasst vorteilhafter Weise eine Einrichtung zur Bestimmung der Reibung zwischen dem Gegenstand und der Transporteinrichtung, sowie eine Überführungseinrichtung zum Überführen des Gegenstandes auf der Transporteinrichtung. Mit der erfindungsgemäßen Vorrichtung kann das erfindungsgemäße Verfahren durchgeführt werden. Mit der entsprechenden Vorrichtung ist es möglich, die Position die der Gegenstand auf der Transporteinrichtung nach der Überführungseinrichtung einnimmt, sehr genau einzustellen. Die erfindungsgemäße Vorrichtung erlaubt es, die individuellen Reibverhältnisse jedes Gegenstandes mit der Transporteinrichtung bei dem Auslösen der Überführungsbewegung zu berücksichtigen.

Vorteilhafterweise umfasst die Reibungsbestimcnungseinrichtung eine Auslöseeinrichtung, die auf vordefinierte Art und Weise eine Messbewegung auslöst. Weiterhin ist eine Messeinrichtung zum Messen der Messbewegung vorteilhafterweise umfasst. Die entsprechende Ausführungsform der erfindungsgemäßen Vorrichtung erlaubt es, die Reibung dadurch zu bestimmen, dass mit einer definierten Kraft eine Messbewegung ausgelöst wird und dass durch Ausmessen des durch die Kraft bewirkten Versatzes (Abstandes) die reibungsabhängige Größe bestimmt wird. Eine vorteilhafte Ausführungsform der erfindungsgemäßen Vorrichtung besteht darin, dass die Messeinrichtung zum Messen der Messbewegung eine Einrichtung zum Messen der Position des Gegenstandes umfasst, wobei das Messen der Position beispielsweise durch eine Abstandsmessung vorgenommen werden kann. Alternativ besteht die Möglichkeit, die Kraft- bzw. Impulsrückwirkung der einzelnen Gegenstände durch eine geeignete Messeinrichtung zu erfassen und daraus, ggf. in Verbindung mit der Transportgeschwindigkeit, die Reibverhältnisse zu bestimmen.

Die Überführeinrichtung und die Einrichtung zum Auslösen der Messbewegung kann jeweils vorteilhafterweise einen Stößel und/oder eine Nocke und/oder eine Bürste umfassen. Mit derartigen Überführeinrichtungen kann eine präzise und wohlgesteuerte Bewegung des Gegenstandes eingeleitet werden und/oder durchgeführt werden.

Die Transporteinrichtung umfasst vorteilhafterweise einen, zwei oder mehrere Platten-, Mattenketten- oder Rollenbettförderer. Der Förderer muss lediglich dazu geeignet sein, dass die Gegenstände in einer Richtung quer zur Transportrichtung bewegt werden können.

Vorteilhafterweise sind Mittel vorgesehen, mit denen die Messwerte der Reibungsermittlungseinrichtung erfasst, bzw. ausgelesen werden und mit denen die Überführungseinrichtung angesteuert werden kann. In Abhängigkeit von der ermittelten Reibung bzw. der reibungsabhängigen Größe wird die Überführungseinrichtung die Überführbewegung verschieden stark auslösen. Die Mittel hierzu können beispielsweise ein PC, ein Prozessrechner oder eine elektronische Schaltung sein.

Im Folgenden wird eine Ausgestaltung der erfindungsgemäßen Vorrichtung und des erfinderischen Verfahrens anhand der in den Figuren dargestellten Ausführungsformen näher erläutert. Dabei zeigt:
- Fig. 1: eine Ausführungsform der erfindungsgemäßen Vorrichtung mit einem Stößel zum Auslösen der Messbewegung
- Fig. 2: eine zweite Ausführungsform der erfindungsgemäßen Vorrichtung mit einer Schanze zum Auslösen der Messbewegung
- Fig. 3: eine dritte Ausführungsform einer erfindungsgemäßen Vorrichtung, bei der zwei Transporteinrichtungen vorgesehen sind.

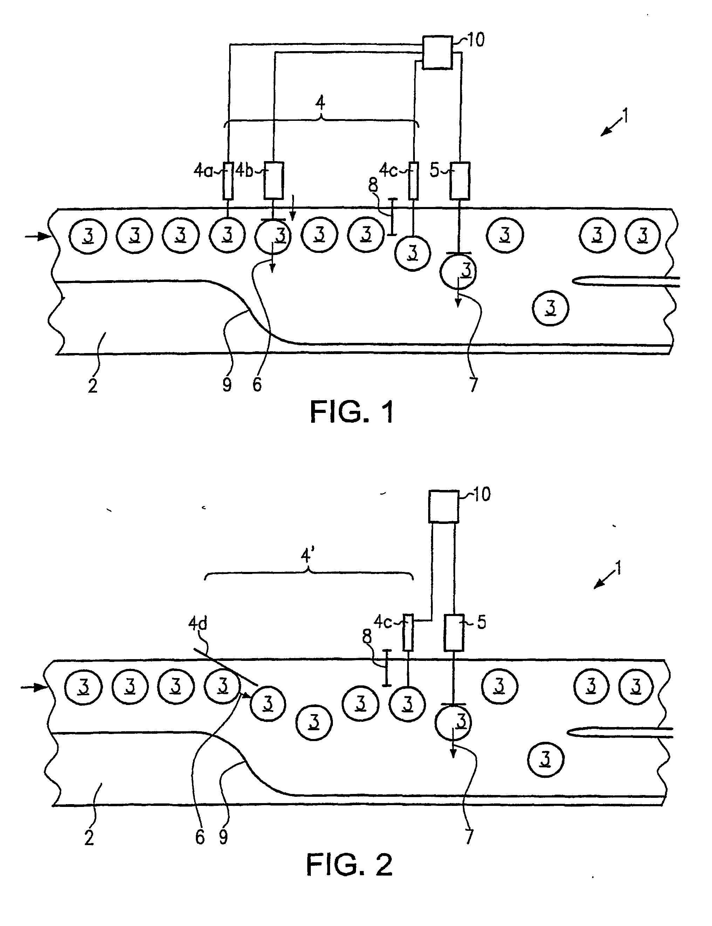

In Fig. 1 ist ein Plattenförderband 2 als Transporteinrichtung dargestellt, auf der sich Gegenstände 3 befinden. Die Gegenstände 3 können beispielsweise Flaschen sein. Die Darstellung in Fig. 1 zeigt die erfindungsgemäße Vorrichtung von oben, so dass die Flaschen kreisförmig erscheinen.

Mit Hilfe eines Geländers 9 wird der Raum, den die Flaschen auf dem Plattenförderband einnehmen können, begrenzt. Am . rechten Ende der Fig. 1 ist zu erkennen, dass ein in der Mitte des Plattenförderbandes angeordneter Teiler den Bereich auf dem Plattenförderband in zwei nebeneinander liegende Teilbereiche unterteilt. Die Bewegung der Flaschen auf dem Plattenförderband erfolgt bei der in Fig. 1 dargestellten Ausführungsform von links nach rechts.

Eine Reibungsbestimmungseinrichtung setzt sich hier aus einem Abstandssensor 4a, einem Pusher 4b mit einem Stößel und einem weiteren Abstandssensor 4c zusammen. Der Abstandssensor 4a kann somit zunächst den Abstand der Flasche 3 vom linken Rand des Plattenförderbandes bzw. von dem Abstandssensor bestimmen. Der Pusher 4b kann anschließend die Flasche 3 mit einer definierten Kraft bzw. einem definierten Impuls leicht anstoßen, um so die Messbewegung 6 auszulösen. Mit dem in Transportrichtung dahinterliegenden Abstandssensor 4c kann anschließend die dadurch neu quer zur Förderrichtung erhaltene Position der Flasche auf dem Plattenförderband 2 bestimmt werden. Der Abstand 8, der sich so eingestellt hat, kann somit mit dem Abstand, der mit dem Abstandssensor 4a gewonnen wurde, verglichen werden, so dass gemessen werden kann, wie weit sich die Flasche durch das Auslösen der Messbewegung bewegt hat. Hieraus wird für diese spezielle Flasche an dieser speziellen Stelle des Plattenförderbandes die Reibung bestimmt. Nachdem die Reibung bekannt ist, kann mit dem Stößel des Pushers 5 die Überführungsbewegung 7 einer Flasche mit einer derartigen - von Gegenstand zu Gegenstand gegebenenfalls unterschiedlichen Kraft bzw. Impuls - so durchgeführt werden, dass der Gegenstand um den gewünschten Abstand quer zur Förderrichtung versetzt wird. Dazu wird ein Rechner 10 oder eine Schaltung 10 eingesetzt, die die ermittelten Werte der Abstandssensoren 4a und/oder 4c erfassen und die Pusher 4b und 5 ansteuern kann. Der Rechner 10 oder die Schaltung 10 ist dabei so ausgelegt, dass in Abhängigkeit von dem mit dem Abstandssensor 4c gemessenen und an den Rechner oder die Schaltung 10 übermittelten Abstandswert 8, der ein Maß für die vorliegende Reibung darstellt, der Pusher 5 so von dem Rechner 10 oder der Schaltung 10 angesteuert wird, dass ein entsprechend angepasster Impuls bzw. eine entsprechend angepasste Kraft auf den Gegenstand 3 übertragen wird.

In Fig. 2 ist eine weitere Ausführungsform der erfindungsgemäßen Vorrichtung gezeigt, bei der eine Schanze 4d dargestellt ist, die dazu führt, dass die von links durch ein nicht dargestelltes Geländer mit gleichen seitlichem Abstand zum linken Rand des Förderbands einlaufenden Flaschen 3 in Fig. 2 zu der gegenüberliegenden Seite des Plattenförderbandes 2 hin ausgelenkt werden. Die Flaschen 3, die eine niedrigere Reibung mit dem Plattenförderband aufweisen, werden dabei einen größeren Abstand zurücklegen als die Flaschen 3 mit einer höheren Reibung. Mittels des Abstandssensors 4c kann der sich eingestellte Abstand 8 vermessen und anschließend mit dem Pusher 5 eine gesteuerte Überführungsbewegung ausgelöst werden, vergleichbar zu der Ausführungsform von Fig. 1. Auch hierzu ist ein Rechner oder eine elektronische Schaltung 10 vorgesehen, die die Messwerte des Abstandssensors 4c erfasst und daraus die benötigte Ansteuerung für den Pusher 5 bestimmt und den Pusher 5 entsprechend ansteuert.

Weiterhin ist es auch möglich, dass die Schanze 4d im wesentlichen quer zur Förderrichtung beweglich bzw. schwenkbar ist, so dass in einer bestimmten Position, die die Schanze einnehmen kann, die auszusortierenden Flaschen durch das Auslösen der Messbewegung mit der Schanze, bewegt werden. In einer zweiten vordefinierten Position der Schanze werden vorbeilaufende Flaschen nicht bewegt, so dass nicht bei allen Flaschen die von links kommend einlaufen, eine Messbewegung ausgelöst wird, sondern lediglich bei denjenigen Flaschen, die aussortiert werden sollen. Dazu kann die Schanze aus der Förderbahn der Flaschen herausschwenkbar oder herausschiebbar vorgesehen sein.

Anstelle einer Abstandsmessung der ausgelenkten Flaschen kann die Ermittlung der Reibungsverhältnisse durch Erfassung der durch die Massenträgheit verursachte Rückwirkung der Flaschen auf die Schanze erfolgen. Zu diesem Zweck kann an der Schanze eine Kraft-, Druck- oder Impulsmesseinrichtung angeordnet sein (nicht dargestellt).

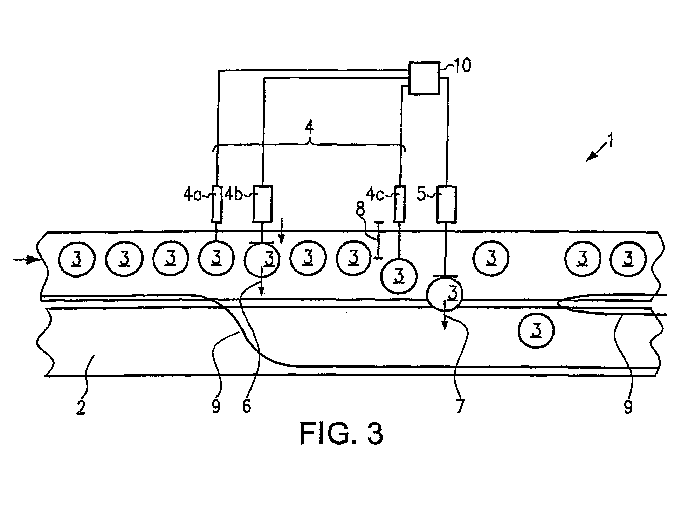

Bei der Ausführungsform in Fig. 3 wird die Überführungsbewegung 7 dazu ausgenutzt, die Flaschen 3 von dem oben dargestellten auf das unten dargestellte Plattenförderband zu überführen.

Eine Ausführungsform des erfindungsgemäßen Verfahrens soll mit Hilfe der in Fig. 1 dargestellten Ausführungsform der erfindungsgemäßen Vorrichtung erläutert werden. Bei Durchführung des erfindungsgemäßen Verfahrens laufen von links auf dem Plattenförderband 2 Flaschen 3 ein. Bei den einlaufenden Flaschen wird mittels eines Sensors 4a der Abstand der Flasche von dem oberen (linken) Rand, oder auch der Abstand von der Flasche zu dem Sensor 4a ermittelt und an den Rechner oder die Schaltung 10 übermittelt. Anschließend wird mit dem Stößel eines Pushers 4b durch bekannten oder vordefinierten Kraft- oder Impulsübertrag eine kleine Messbewegung 6 ausgelöst. Dadurch, dass der Abstand der Flasche von dem oberen Ende des Plattenförderbandes oder von dem Sensor 4a bekannt ist, kann der Stößel des Pushers 4b in eine Position gebracht werden, in der die vor dem Stößel laufende Flasche 3 sich unmittelbar vor dem Stößel des Pushers 4b befindet. Die Ansteuerung des Pushers 4b hierzu erfolgt durch den Rechner oder die Schaltung 10. In diesem Moment, in dem sich die Flasche 3 vor dem Stößel befindet, kann mit einer kontrollierten Bewegung des Stößels die Messbewegung der Flasche 3 so initiiert werden, dass ein kontrolliertes, langsames Anschieben der Flasche erreicht wird. Ein Aufschlagen des Stößels auf die Flasche 3 wird durch das vorherige Annähern des Stößels an die Flasche 3 vermieden, wodurch auch ein Kippen der Flasche nahezu ausgeschlossen wird.

Die weiterlaufenden Flaschen werden anschließend mit dem Abstandssensor 4c vermessen, der den Abstand 8 von der Messeinrichtung 4c ermittelt. Das Ergebnis der Messung wird an den Rechner oder die Schaltung 10 übermittelt. Aus der gemessenen Abstandsdifferenz sind die Reibverhältnisse bestimmbar.

Durch die vordefiniert ausgelöste Messbewegung hat die Flasche eine neue Position in Richtung quer zu dem Plattenförderband eingenommen. Hat die Flasche eine niedrige Reibung mit dem Plattenförderband, so hat die Flasche eine große Bewegung in Richtung quer zu der Transportrichtung gemacht. Bei einer hohen Reibung ist die Bewegung auf Grund der vordefiniert ausgelösten Messbewegung klein.

Dadurch, dass mit dem Sensor 4c die neue Position bzw. der neue Abstand 8 gemessen und damit bekannt ist, kann der Stößel des Pushers 5 mit dem Rechner oder der Schaltung 10 so eingestellt werden, dass die einlaufende Flasche 3 direkt vor dem Stößel einläuft. Dadurch kann ein präzises Auslösen der Überführungsbewegung mit dem Stößel des Pushers 5 erreicht werden, wobei hierbei die ermittelten Reibungswerte zugrunde gelegt werden können. Wurde durch die vordefiniert ausgelöste Messbewegung eine große Bewegung durchgeführt, so ist die Kraft oder der Impuls, den der Pusher 5 auf die Flasche 3 ausüben muss, um die Überführungsbewegung auszulösen, relativ klein. Liegt jedoch eine hohe Reibung vor, so kann der Stößel des Pushers 5 eine den Reibungsverhältnissen angepaßte hohe Kraft bzw. ein hohen Impuls auf die Flasche 3 ausüben bzw. übertragen. Die Ansteuerung des Pushers 5 hierzu erfolgt mit dem Rechner oder der Schaltung 10.

Durch die beschriebene Verfahrensweise ist es möglich, die Flaschen mit der Überführungsbewegung 7 so auf dem Plattenförderband zu positionieren, dass sie sich beim nach rechts gerichteten Auslaufen immer wohldefiniert neben dem rechts in Fig. 1 dargestellten Geländer befinden. Auch ein Anschlagen der Flaschen, die eine geringe Reibung aufweisen, gegen das untere Geländer 9 kann ausgeschlossen werden.

Das erfindungsgemäße Verfahren, wie es mit der in Fig. 2 dargestellten Vorrichtung ausgeführt werden kann, wird wie folgt durchgeführt:

Die von links in linksbündiger Ausrichtung einlaufenden Flaschen 3 werden mittels der Schanze 4d quer zu der Transportrichtung ausgelenkt. Auch hier wiederum ist es so, dass die Flaschen 3 , die mit dem Plattenförderband eine kleine Reibung aufweisen, stark ausgelenkt werden, die Flaschen 3 mit einer höheren Reibung dagegen weniger stark. Die Geschwindigkeit, mit der die Flaschen 3 auf die Schanze 4d treffen, d.h. die Fördergeschwindigkeit ist hierbei vorteilhafterweise bekannt bzw. wird gemessen, da die Stärke der Auslenkung der Flaschen 3 von der Auftreffgeschwindigkeit abhängen kann. Mittels des Sensors 4c wird die Stärke der Auslenkung, d. h. der Abstand 8 gemessen. Das Messergebnis wird an den Rechner oder die Schaltung 10 übermittelt. Hieraus kann auf die Reibung zwischen der Flasche 3 und dem Plattenförderband 2 geschlossen werden. Mit dem Stößel des Pushers 5 kann anschließend eine Flasche, in dem in Fig. 2 unteren Bereich des Plattenförderbandes 2 überführt werden. Dazu wird der Pusher 5 von dem Rechner oder der Schaltung 10 in Abhängigkeit von dem Abstandsmessergebnis des Abstandssensors 4c angesteuert. Die Flaschen, die nicht auf dem Plattenförderband 2 bewegt werden sollen, laufen in dem oberen Bereich des Plattenförderbandes nach rechts aus. Eine festinstallierte Schanze 4b hat den Vorteil, dass mit vergleichsweise zu Fig. 1 einfachen Mitteln die Messbewegung ausgelöst werden kann. Bei einer beweglichen Schanze 4b, d. h. einer Schanze die zeitweise in den Bereich der Förderbahn der Flaschen auf dem Plattenförderband eingeführt wird, ist es möglich, nur diejenigen Flaschen einer Messbewegung zu unterziehen, die überführt werden sollen.

Das erfindungsgemäße Verfahren, wie es mit der erfindungsgemäßen Vorrichtung aus Fig. 3 durchgeführt wird, besteht darin, mit dem Stößel eines Pushers 5 die Überführungsbewegung 7 so auszulösen, dass die Flaschen 3 von dem obereren auf das unten dargestellte, separate Förderband 2 überführt werden. Statt des unten dargestellten Förderbandes ist es auch möglich, die Flaschen von dem Förderband herunterzustoßen und z. B. in einem Sammelcontainer aufzufangen. Es ist aber auch denkbar, parallel zum Förderband 2 noch weitere Förderbänder vorzusehen, so dass Flaschen durch unterschiedlich große Impulse beispielsweise nach Farben sortiert auf verschiedene Förderbänder gesteuert verschiebbar sind.

## Patentansprüche

1. Verfahren zum Sortieren von Gegenständen (3) auf einer Transporteinrichtung (2) mit den Schritten:
Ermitteln der Reibung zwischen einem Gegenstand (3) und der Transporteinrichtung (2) und
Auslösen einer Überführbewegung (7) des Gegenstandes (3) auf der Transporteinrichtung (2) in Abhängigkeit von der ermittelten Reibung zwischen dem Gegenstand (3) und der Transporteinrichtung (2).

2. Verfahren nach Anspruch 1, **dadurch gekennzeichnet, dass** das Ermitteln der Reibung zwischen dem Gegenstand (3) und . der Transporteinrichtung (2) die Schritte umfasst:
- Vordefiniertes Auslösen einer Messbewegung (6) des Gegenstandes (3) und
- Messen der Messbewegung.

3. Verfahren nach Anspruch 2, **dadurch gekennzeichnet, dass** die Messbewegung (6) klein ist im Vergleich zur Überführungsbewegung.

4. Verfahren nach einem der Ansprüche 2 oder 3, **dadurch gekennzeichnet, dass** das Messen der Messbewegung (6) mindestens die Bestimmung einer Positionsinformation des Gegenstandes (3) auf der Transporteinrichtung (2) und/oder die Ermittlung der Rückwirkung des Gegenstandes auf ein die Messbewegung auslösendes Organ umfasst.

5. Verfahren nach Anspruch 4, **dadurch gekennzeichnet, dass** die Bestimmung mindestens einer Positionsinformation eine Abstandsmessung umfasst.

6. Verfahren nach einem der Ansprüche 1 bis 5, **dadurch gekennzeichnet, dass** der Gegenstand (3) auf der Transporteinrichtung (2) in Richtung der Bewegung der Transporteinrichtung (2) transportiert wird und die Überführbewegung (7) und die Messbewegung (6) im Wesentlichen senkrecht zur Transportrichtung (2) erfolgen.

7. Verfahren nach einem der Ansprüche 1 bis 6, **dadurch gekennzeichnet, dass** das Auslösen der Überführbewegung (7) und/oder der Messbewegung (6) mit einem Stößel (4b, 5) und/oder einer Nocke und/oder einer Bürste durchgeführt wird.

8. Verfahren nach einem der Ansprüche 1 bis 7, **dadurch gekennzeichnet, dass** das Auslösen der Messbewegung (6) mit einer Schanze (4d) durchgeführt wird.

9. Verfahren nach einem der Ansprüche 1 bis 8, **dadurch gekennzeichnet, dass** die Überführbewegung (7) ein Positionieren des Gegenstandes (3) in eine Richtung senkrecht zur Transportrichtung umfasst.

10. Verfahren nach einem der Ansprüche 1 bis 8, **dadurch gekennzeichnet, dass** die Überführbewegung (7) ein Bewegen des Gegenstandes (3) von der Transporteinrichtung (2) herunter umfasst.

11. Verfahren nach einem der Ansprüche 1 bis 10, **dadurch gekennzeichnet, dass** das Auslösen der Überführbewegung (7) und/oder das Auslösen der Messbewegung (6) durch ein Heranbewegen des Stößels (4b, 5) bis kurz vor bzw. an den Gegenstand (3) und anschließendes Schieben des Gegenstandes (3) durch den Stößel (4b, 5) umfaßt.

12. Verfahren nach einem der Ansprüche 1 bis 11, **dadurch gekennzeichnet, dass** die Überführbewegung (7) zum Sortieren oder Aussortieren der Gegenstände (3) aus einer Reihe von durchlaufenden Gegenständen (3) durchgeführt wird.

13. Verfahren nach einem der Ansprüche 1 bis 12, **dadurch gekennzeichnet, dass** die Gegenstände (3) Flaschen (3) oder Dosen sind.

14. Verfahren nach einem der Ansprüche 1 bis 13, **dadurch gekennzeichnet, dass** die Transporteinrichtung (2) einen, zwei oder mehrere Platten-, Mattenketten- oder Rollenbettförderer umfasst.

15. Vorrichtung (1) zum Sortieren von Gegenständen (3) auf einer Transporteinrichtung (2) mit:
einer Reibungsermittlungseinrichtung (4) zur Ermittlung der Reibung zwischen dem Gegenstand (3) und der Transporteinrichtung (2), und
einer Überführungseinrichtung (5) zum Überführen des Gegenstandes (3) auf der Transporteinrichtung (2) in Abhängigkeit von der ermittelten Reibung zwischen dem Gegenstand (3) und der Transporteinrichtung (2).

16. Vorrichtung nach Anspruch 15, **dadurch gekennzeichnet, dass** die Reibungsermittlungseinrichtung (4) eine Auslöseeinrichtung (4b, 4d) zum vordefinierten Auslösen einer Messbewegung (6) sowie einer Messeinrichtung (4c) zum Messen der Messbewegung (6) umfasst.

17. Vorrichtung nach Anspruch 16, **dadurch gekennzeichnet, dass** die Messeinrichtung (4c) zum Messen der Messbewegung (6) eine Einrichtung (4c) zum Messen der Position des Gegenstandes (3) und/oder eine Einrichtung zur Ermittlung der Rückwirkung des Gegenstandes auf ein die Messbewegung auslösendes Organ umfasst.

18. Vorrichtung nach einem der Ansprüche 16 oder 17, **dadurch gekennzeichnet, dass** die Messeinrichtung (4c) zum Messen der Messbewegung eine Einrichtung (4c) zur Abstandsmessung umfasst.

19. Vorrichtung nach einem der Ansprüche 15 bis 18, **dadurch gekennzeichnet, dass** die Überführeinrichtung (5) und/oder die Auslöseeinrichtung (4b, 4d) zum vordefinierten Auslösen einer Messbewegung (6) einen Stößel (4b, 5) und/oder eine Nocke und/oder eine Bürste umfaßt.

20. Vorrichtung nach einem der Ansprüche 16 bis 19, **dadurch gekennzeichnet, dass** die Transporteinrichtung (2) einen, zwei oder mehrere Platten-, einen Kettenmatten- oder einen Rollenbettförderer umfasst.

21. Vorrichtung nach einem der Ansprüche 15 bis 20, **dadurch gekennzeichnet, dass** Mittel (10) zum Erfassen der Messwerte der Reibungsermittlungseinrichtung (4) und zum Ansteuern der Überführungseinrichtung (5) vorgesehen sind.

## Claims

1. Method for sorting objects (3) on a conveying device (2) in the following stages:
Detecting friction between an object (3) and the conveying device (2), and
triggering a transfer movement (7) of the object (3) on the conveying device (2) in dependence on detected friction between the object (3) and the conveying device (2).

2. Method according to Claim 1, **characterised in that** detection of friction between the object (3) and the conveying device (2) includes the following stages:
- pre-defined triggering of a measuring movement (6) of the object (3), and
- measuring of the measuring movement.

3. Method according to Claim 2, **characterised in that** the measuring movement (6) is small as compared to the transfer movement.

4. Method according to one of Claims 2 or 3, **characterised in that** measuring the measuring movement (6) includes at least determination of information of position of the object (3) on the conveying device (2) and/or detection of the reaction of the object on an element which triggers the measuring movement.

5. Method according to Claim 4, **characterised in that** the determination of at least information of position includes a measuring of distance.

6. Method according to one of Claims 1 to 5, **characterised in that** the object (3) is transported on the conveying device (2) in the direction of movement of the conveying device (2), and the transfer movement (7) and the measuring movement (6) take place substantially perpendicularly to the conveying direction (2).

7. Method according to one of Claims 1 to 6, **characterised in that** triggering of the transfer movement (7) and/or of the measuring movement (6) is carried out by means of a tappet (4b, 5) and/or a cam and/or a brush.

8. Method according to one of Claims 1 to 7, **characterised in that** triggering of the measuring movement (6) is carried out by means of an entrenchment (4d).

9. Method according to one of Claims 1 to 8, **characterised in that** the transfer movement (7) includes positioning of the object (3) in a direction perpendicularly to the conveying direction.

10. Method according to one of Claims 1 to 8, **characterised in that** the transfer movement (7) includes a movement of the object (3) from the conveying device (2) downward.

11. Method according to one of Claims 1 to 10, **characterised in that** triggering of the transfer movement (7) and/or triggering of the measuring movement (6) includes movement of the tappet (4b, 5) toward just up to or onto the object (3) and subsequent pushing of the object (3) by the tappet (4b, 5).

12. Method according to one of Claims 1 to 11, **characterised in that** the transfer movement (7) is performed for sorting or sorting out objects (3) from a number of passing objects (3).

13. Method according to one of Claims 1 to 12, **characterised in that** the objects (3) are bottles (3) or cans.

14. Method according to one of Claims 1 to 13, **characterised in that** the conveying device (2) includes one, two or more plate, mat chain or roller bed conveyers.

15. Device (1) for sorting objects (3) on a conveying device (2), with
a friction detection device (4) for detecting friction between the object (3) and the conveying device (2), and
a transfer device (5) for transfer of the object (3) on the transport device (2) in dependence of detected friction between the object (3) and the conveying device (2).

16. Device according to Claim 15, **characterised in that** the friction detection device (4) includes a triggering device (4b, 4d) for pre-defined triggering of a measuring movement (6) as well as a measuring device (4c) for measuring the measuring movement (6).

17. Device according to Claim 16, **characterised in that** the measuring device (4c) for measuring the measuring movement (6) includes a device (4c) for measuring the position of the object (3) and/or a device for detecting the reaction of the object to an element which triggers the measuring movement.

18. Device according to one of Claims 16 or 17, **characterised in that** the measuring device (4c) for measuring the measuring movement includes a device (4c) for distance measuring.

19. Device according to one of Claims 15 to 18, **characterised in that** the transfer device (5) and/or the triggering device (4b, 4d) for pre-defined triggering of a measuring movement (6) includes a tappet (4b, 5) and/or a cam and/or a brush.

20. Device according to one of Claims 16 to 19, **characterised in that** the conveying device (2) includes one, two or more plate, chain mat or a roller bed conveyers.

21. Device according to one of Claims 15 to 20, **characterised in that** means (10) are provided for detecting the measuring values of the friction detection device (4) and for controlling the transfer device (5).

## Revendications

1. Procédé de tri d'objets (3) dans une installation de transport (2) comprenant les étapes suivantes :
- on détermine le frottement entre l'objet (3) et l'installation de transport (2), et
- on déclenche un mouvement de transfert (7) de l'objet (3) sur l'installation de transport (2) en fonction du frottement constaté entre l'objet (3) et l'installation de transport (2).

2. Procédé selon la revendication 1,
**caractérisé en ce que**
l'on détermine le frottement entre l'objet (3) et l'installation de transport (2) par les étapes suivantes :
- on déclenche de manière prédéfinie un mouvement de mesure (6) de l'objet (3), et
- on mesure le mouvement de mesure.

3. Procédé selon la revendication 2,
**caractérisé en ce que**
le mouvement de mesure (6) est petit par comparaison au mouvement de transfert.

4. Procédé selon l'une quelconque des revendications 2 ou 3,
**caractérisé en ce que**
la mesure du mouvement de mesure (6) comprend au moins la détermination d'une information de position de l'objet (3) sur l'installation de transport (2) et/ou la détermination de la réaction de l'objet à un organe déclenchant le mouvement de mesure.

5. Procédé selon la revendication 4,
**caractérisé en ce que**
la détermination d'au moins une information de position comprend une mesure de distance.

6. Procédé selon l'une quelconque des revendications 1 à 5,
**caractérisé en ce que**
l'objet (3) est transporté sur l'installation de transport (2) dans la direction du mouvement de l'installation de transport (2) et le mouvement de transfert (7) et le mouvement de mesure (6) se font essentiellement perpendiculairement à la direction de transport (2).

7. Procédé selon l'une quelconque des revendications 1 à 6,
**caractérisé en ce qu'**
on déclenche le mouvement de transfert (7) et/ou le mouvement de mesure (6) à l'aide d'un poussoir (4b, 5) et/ou d'une came et/ou d'un balai.

8. Procédé selon l'une quelconque des revendications 1 à 7,
**caractérisé en ce qu'**
on déclenche le mouvement de mesure (6) à l'aide d'une rampe (4d).

9. Procédé selon l'une quelconque des revendications 1 à 8,
**caractérisé en ce que**
le mouvement de transfert (7) comprend le positionnement de l'objet (3) dans la direction perpendiculaire à la direction de transport.

10. Procédé selon l'une quelconque des revendications 1 à 8,
**caractérisé en ce que**
le mouvement de transfert (7) comprend un déplacement de l'objet (3) avec descente dans l'installation de transport (2).

11. Procédé selon l'une quelconque des revendications 1 à 10,
**caractérisé en ce que**
le déclenchement du mouvement de transfert (7) et/ou le déclenchement du mouvement de mesure (6) comprend le rapprochement du poussoir (4b, 5) pour arriver juste devant ou contre l'objet (3) et ensuite pousser l'objet (3) à l'aide du poussoir (4b, 5).

12. Procédé selon l'une quelconque des revendications 1 à 11,
**caractérisé en ce que**
le mouvement de transfert (7) est effectué pour classer ou éliminer des objets (3) d'une série d'objets (3) qui défilent.

13. Procédé selon l'une quelconque des revendications 1 à 12,
**caractérisé en ce que**
les objets (3) sont des bouteilles (3) ou des boîtes.

14. Procédé selon l'une quelconque des revendications 1 à 13,
**caractérisé en ce que**
l'installation de transport (2) comprend un, deux ou plusieurs convoyeurs à plaques, à chaîne à mailles ou à rouleaux.

15. Dispositif (1) de tri d'objets (3) sur une installation de transport (2) comprenant :
- une installation de détermination du frottement (4) pour déterminer le frottement entre l'objet (3) et l'installation de transport (2), et
- une installation de transfert (5) pour transférer l'objet (3) sur l'installation de transport (2) en fonction du frottement entre l'objet (3) et l'installation de transport (2) ainsi déterminé.

16. Dispositif selon la revendication 15,
**caractérisé en ce que**
l'installation de détermination du frottement (4) comprend une installation de déclenchement (4b, 4d) pour déclencher de manière prédéfinie un mouvement de mesure (6) ainsi qu'une installation de mesure (4c) pour mesurer le mouvement de mesure (6).

17. Dispositif selon la revendication 16,
**caractérisé en ce que**
l'installation de mesure (4c) servant à mesurer le mouvement de mesure (6) comprend une installation (4c) pour mesurer la position de l'objet (3) et/ou une installation pour déterminer la réaction de l'objet à un organe déclenchant le mouvement de mesure.

18. Dispositif selon l'une quelconque des revendications 16 ou 17,
**caractérisé en ce que**
l'installation de mesure (4c) comprend une installation (4c) de mesure du mouvement de mesure comprend une installation (4c) pour mesurer une distance.

19. Dispositif selon l'une quelconque des revendications 15 à 18,
**caractérisé en ce que**
l'installation de transfert (5) et/ou l'installation de déclenchement (4b, 4d) pour déclencher de manière prédéfinie un mouvement de mesure (6) comprend un poussoir (4b, 5) et/ou une came et/un balai .

20. Dispositif selon l'une quelconque des revendications 16 à 19,
**caractérisé en ce que**
l'installation de transport (2) comprend un, deux ou plusieurs convoyeurs à plaques, un convoyeur à chaîne à maillons ou un convoyeur à rouleaux.

21. Dispositif selon l'une quelconque des revendications 15 à 20,
**caractérisé par**
des moyens (10) pour saisir des valeurs de mesure de l'installation de détermination du frottement (4) et pour commander l'installation de transfert (5).
